# EUROPÄISCHE PATENTANMELDUNG

(11) **EP 0 582 074 A1**
(43) Veröffentlichungstag der Anmeldung: **09.02.1994**
(21) Anmeldenummer: 93109951.9
(22) Anmeldetag: 22.06.1993
(51) Int. Cl.: B31B 1/10

(54) **Schneid- und Rillmaschine für eine Warenbahn, insbesondere Wellpappenbahn**

(30) Priorität: 06.08.1992 DE 4226075
(71) Anmelder: BHS-Bayerische Berg-, Hütten- und Salzwerke AG, D-80339 München (DE)
(72) Erfinder: Schnabel, Klaus, Dipl.-Ing., D-92655 Grafenwöhr (DE); Kunz, Karl, Ing., D-8480 Weiden (DE)
(74) Vertreter: Eder, Eugen, Dipl.-Ing.

(57) **Zusammenfassung**

Die Erfindung bezieht sich auf eine Schneid- und Rillmaschine (1) für eine Warenbahn, insbesondere Wellpappenbahn (2), mit einer den Rillwerkzeugen (3, 4) nachgeordneten Messersektion (5) mit Schneidwerkzeugkörpern. Die Messersektion (5) besteht hierbei aus mindestens zwei, voneinander unabhängigen Schneideinheiten (6, 7) mit Schneidmessern (10, 11), Gegenfläche (8, 9) und voneinander unabhängig einstellbaren Schneidwerkzeugkörpern, wobei über mindestens eine Führungsvorrichtung die Warenbahnen (2) wechselweise durch eine der Schneideinheiten (6, 7) geführt ist und die Rillwerkzeuge (3, 4) jeweils mit einer Schnellpositioniervorrichtung verbunden sind.

## Beschreibung

Die Erfindung bezieht sich auf eine Schneid- und Rillmaschine für eine Warenbahn, insbesondere Wellpappenbahn mit einer den Rillwerkzeugen nachgeordneten Messersektion mit Schneidwerkzeugkörpern.

Schneid- und Rillmaschinen haben die Aufgabe, die Wellpappenbahnen zu rillen und zu schneiden. Beim Formatwechsel müssen diese Maschinen auf die neuen Schneid- und Rillmaße eingestellt werden.

In der Praxis ist es bekannt, eine Schneid- und Rillmaschine zu verwenden, bei welcher die Werkzeuge des Schneid- und Rillautomaten in der Bahnlücke für einen Formatwechsel neu zu positionieren sind. Als Nachteil ergibt sich hierbei, daß beim Einstellen von einem alten auf einen neuen Formatauftrag zuweilen relativ große Positionierwege zurückgelegt werden müssen, weshalb auch längere Zeiten erforderlich sind, um die Maschine auf einen neuen Formatauftrag einzustellen. Dies bedingt eine relativ große Lücke zwischen der auslaufenden Bahn und der neu einlaufenden Bahn; das ist wiederum nur mit entsprechend längerer Beschleunigung der Restbahn und kleinerer Geschwindigkeit der neu einlaufenden Bahn möglich.

Diesen Werten sind jedoch bestimmte Grenzen gesetzt, weshalb diese bekannte Maschine meist nur geringe Formatwechsel-Geschwindigkeiten zuläßt.

Aus der EP 0 085 387 und E 22 50 125 ist es bekannt, sogenannte Tandem-Maschinen ohne Veränderung des Bahnverlaufs zu verwenden. Hierbei wird diese sich in Arbeitsstellung befindende Maschine ausgerückt. Die vorher neu eingestellte zweite Maschine wird eingerückt, d.h. Ober- und Unterwerkzeug werden in Eingriff gebracht.

Zum Aus- und Einrücken der Maschine wird eine Bahnlücke benötigt, da die neu ankommende Bahn von Anfang an von der neu eingestellten Maschine geschnitten werden muß; die alte auslaufende Bahn muß immer noch von der mit dem alten Auftrag eingestellten Maschine geschnitten werden. Zum Erzielen einer Lücke muß die Restbahn beschleunigt werden, bzw. die neuankommende Bahn muß verzögert werden.

Es ergeben sich dadurch folgende Nachteile:
- Durch die Beschleunigung der Restbahn leidet die Längengenauigkeit des nachfolgenden Querschneiders, woraus sich Qualitätseinbußen ergeben.
- Die maximal erreichbare Geschwindigkeit beim Beschleunigen der Restfahne begrenzt ebenfalls durch die maximal mögliche Hubzahlkurve des Querschneiders die Formatwechselgeschwindigkeit.
- Durch die Beschleunigung der Restbahn steigt auch von Schnitt zu Schnitt des Querschneiders die kinetische Energie der produzierten Wogen, was wiederum zu Störungen in der nachfolgenden Ablage führen kann. Man muß in dem den Schneid- und Rillautomat nachfolgenden Aggregaten mit höheren Bahngeschwindigkeiten arbeiten, nur um einen Formatwechsel bei einer bestimmten Bahngeschwindigkeit durchführen zu können.
- Diese bekannte Maschine ist kostenaufwendig, da sie zweimal vorhanden sein muß, jedoch immer nur eine Maschine arbeitet.

Aus der Praxis ist ferner eine sogenannte Tandem-Maschine mit Veränderung des Bahnverlaufs bekannt. Hierbei werden alte, auslaufende Bahn und neue ankommende Bahn auf verschiedene Bahnlaufhöhen beim Formatwechsel gefahren. Die Bahnen werden nach Durchführung des Kurzquerschneiderschnittes über eine Weiche gefahren. Nach Beendigung des Formatwechsels wird die Maschine, mit der nun produziert wird, auf normales Bahnniveau gefahren.

Als Nachteil ergibt sich ein sehr hoher Aufwand, um die Maschinen und um die Bahnführungen vor- und nach der Maschine zu verschieben. Da eine derartige Tandemmaschine wiederum zweifach installiert werden muß, resultiert hieraus ein hoher Kostenaufwand.

Aus der DE 38 26 993 ist es für den Ersatz von Werkzeugen bekannt, auf einem Werkzeugträger mehrere Werkzeuge vorzusehen, die wechselweise eingesetzt werden. Hierbei wirken die Werkzeuge ober- und unterhalb der Warenbahn paarweise zusammen.

Bei allen vorgenannten bekannten Ausführungen müssen bei Formatwechsel in der Regel immer die Anlage von der hohen aktuellen Produktionsgeschwindigkeit auf die maximal mögliche Formatwechsel-Geschwindigkeit, welche im allgemeinen niedriger als die Produktionsgeschwindigkeit ist, heruntergefahren werden. Hieraus entstehen Qualitätsmängel hinsichtlich Verklebung und Geradheit der Wellpappe.

Ausgehend vom vorgenannten Stand der Technik liegt der vorliegenden Erfindung die Aufgabe zugrunde, eine Maschine der eingangs genannten Art zu schaffen, bei welcher ohne erheblichen Kostenaufwand und ohne nennenswerte Lücke der Formatwechsel durchzuführen ist, d.h. der Formatwechsel soll möglichst bei Bahngeschwindigkeit durchgeführt werden, ohne die aktuelle Produktionsgeschwindigkeit verlassen zu müssen.

Diese Aufgabe wird erfindungsgemäß dadurch gelöst, daß die Messersektion aus mindestens zwei voneinander unabhängigen Schneideinheiten mit Schneidmesser, Gegenflächen und voneinander unabhängig einstellbaren Schneidwerkzeugkörpern besteht, daß über mindestens eine Führungsvorrichtung die Warenbahn wechselweise durch eine der Schneideinheiten geführt ist und daß die Rillwerkzeuge jeweils mit einer Schnellpositioniervorrichtung verbunden sind.

Hierdurch ergibt sich der Vorteil, daß der alte Auftrag vollkommen von den Messern der ersten Maschine geschnitten wird, während die neu einlaufende Bahn in der Schneid-Rillanlage sofort von den neu eingestellten Messern der zweiten Maschine bearbeitet werden. Die Rillwerkzeuge sind nur einfach vorhanden, d.h. es liegt vorteilhafterweise keine Tandembestückung vor. Diese Rillwerkzeuge sind mit einer Schnellpositioniervorrichtung ausgerüstet, so daß auf einfache Weise eine schnelle Umstellung auf ein neues Format durchführbar ist.

Beim Formatwechsel ist keine nennenswerte Restbahnbeschleunigung nötig und es ergibt sich auch keine nennenswerte Lücke, um von einer Schneideinheit auf die andere Schneideinheit umzustellen. Die Schneideinheiten sind schon vorher umgestellt. Der Formatwechsel kann bei maximaler Produktionsgeschwindigkeit ohne Einschränkung durchgeführt werden, da beim Formatwechsel keine Umstellung der Schneideinheiten erfolgen muß, sondern nur die Rillwerkzeuge umgestellt werden.

Obere und untere Schneideinheiten zählen zwar bereits zum bekannten Stand der Technik, jedoch vermitteln sie keine Anregung, mit einer Führungsvorrichtung zur wechselweisen Beschickung und mit Rillwerkzeugen mit Schnellpositioniervorrichtung im Sinne der vorliegenden Erfindung kombiniert zu werden.

Hieraus resultieren erfindungsgemäß folgende Vorteile:
- Es sind hohe Formatwechsel-Geschwindigkeiten möglich, d.h. bis 300 m pro Minute.
- Es ergeben sich keine Qualitätseinbußen in der Heizpartie, da keine Geschwindigkeitsreduzierung beim Formatwechsel nötig ist.
- Es liegt eine kostengünstige, einfache Maschinenausführung vor, da keine Tandemmaschine nötig ist.
- Es ist keine nennenswerte Restbahnbeschleunigung notwendig.
- Es ergibt sich keine Formatwechsel-Geschwindigkeitsbegrenzung wegen Beschränkung durch Querschneider-Hubzahlkurve beim Beschleunigen.
- Es treten keine Probleme in der Ablage auf, da keine nennenswerte Restbahnbeschleunigung vorliegt.
- Die synchrone Bewegung der Messerschneideinheiten ergibt eine einfache Maschinenausführung.

Vorteilhafte Weiterbildungen ergeben sich aus den Unteransprüchen.

Die Erfindung wird nachfolgend anhand von in der Zeichnung dargestellten Ausführungsbeispielen näher beschreiben. In der Zeichnung zeigen:
- Fig. 1 bis Fig. 7: eine Ausführung einer Schneid- und Rillanlage bei Durchführung des Formatwechsels in einzelnen Arbeitsschritten;
- Fig. 8 und 9: eine andere Ausführungsmöglichkeit der Führungsvorrichtung zur Durchführung des Formatwechsels;
Die erfindungsgemäße Schneid- und Rillmaschine 1 besteht im wesentlichen aus Rillwerkzeugen 3, 4, welche einer Messersektion 5 vorgeordnet sind. Eine Warenbahn, insbesondere Wellpappenbahn 2, durchläuft nacheinander die Rillwerkzeuge 4, 3 und gelangt zu der Messersektion 5. Diese Messersektion 5 besteht aus zwei voneinander unabhängigen Schneideinheiten 6 und 7, welche jeweils mit Schneidmessern 10 und 11 sowie mit Gegenflächen 8 und 9 und mit voneinander unabhängig einstellbaren Schneidwerkzeugkörpern ausgerüstet sind.

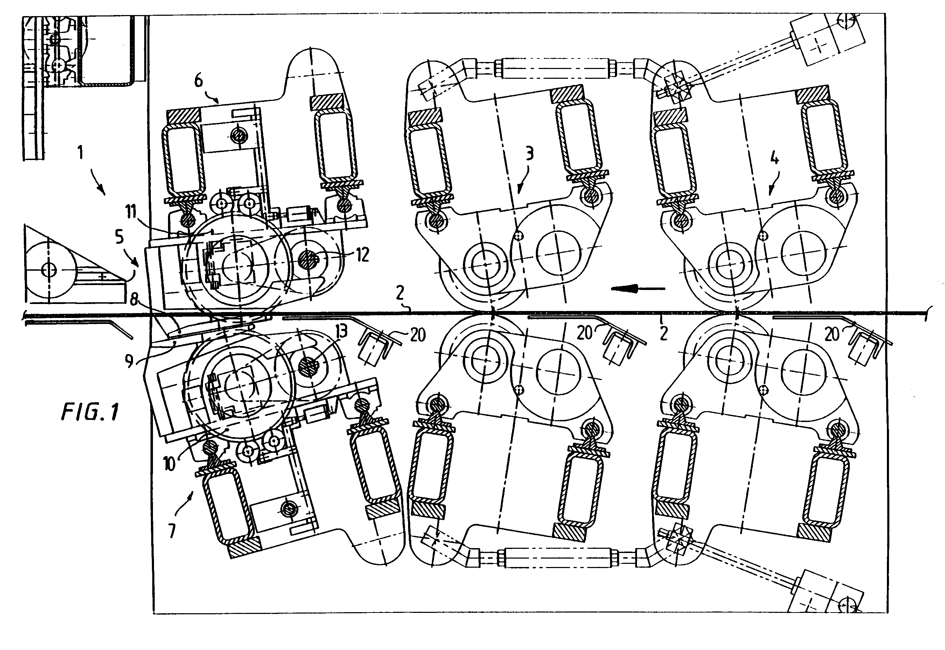

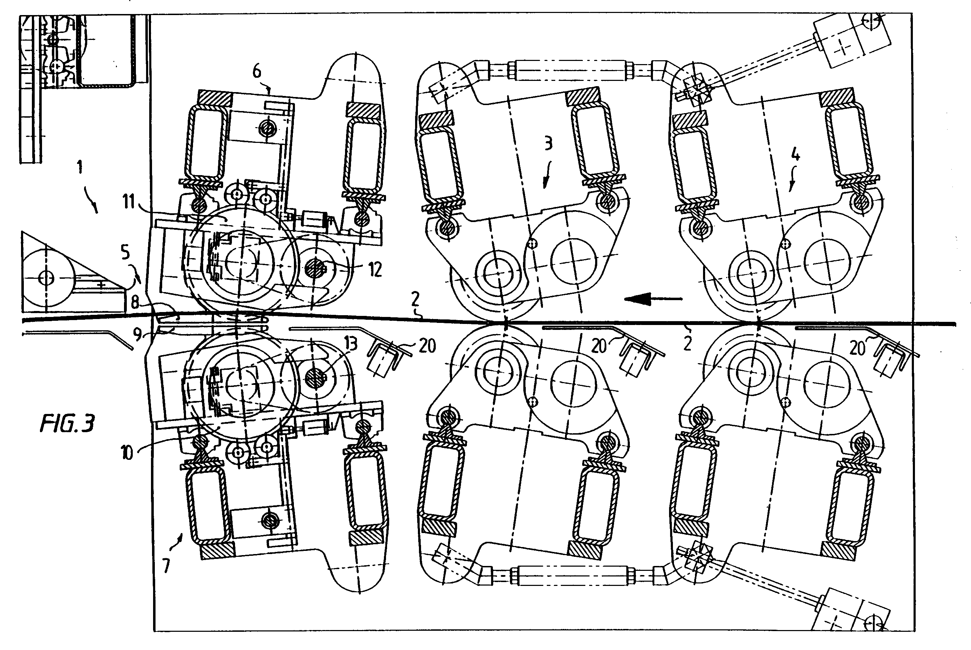

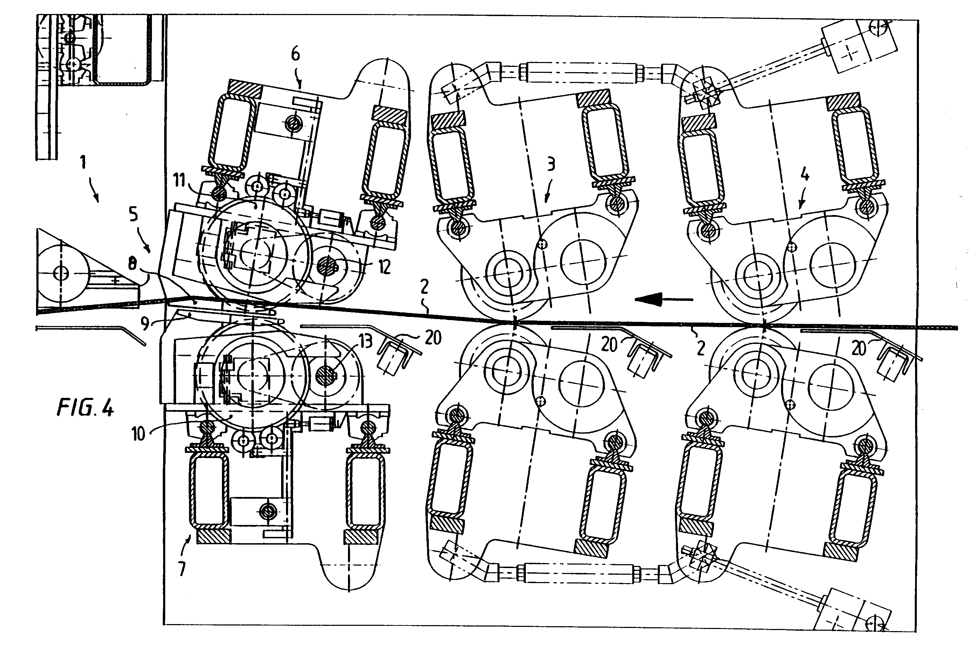

Bei der in Fig. 1 bis 7 dargestellten Ausführungsform sind die beiden Schneideinheiten 6, 7 übereinander angeordnet. Jede dieser Schneideinheiten ist schwenkbar gelagert, wozu eine Lagerung 12, 13 vorgesehen ist. Damit kann die obere Schneideinheit 6 in der Lagerung 12 um die Antriebswelle, und die untere Schneideinheit 7 in der Lagerung 13 um die Antriebswelle schwenken.

Die Wellpappenbahn 2 durchläuft in der in Fig. 1 dargestellten Lage die obere Schneideinheit 6, wobei sie auf der Gegenfläche 8 der oberen Schneideinheit 6 aufliegt und von dem Messer 11 dieser Schneideinheit bearbeitet wird. Die Bahn 2 kann dabei zusätzlich durch ortsfeste Führungen 20 abgestützt werden. Die untere Schneideinheit 7 ist außer Funktion. Sie läßt sich damit auf das neue gewünschte Format einstellen, und zwar dadurch, daß die Schneidwerkzeugkörper die Schneidmesser 10 entsprechend positioniert werden.

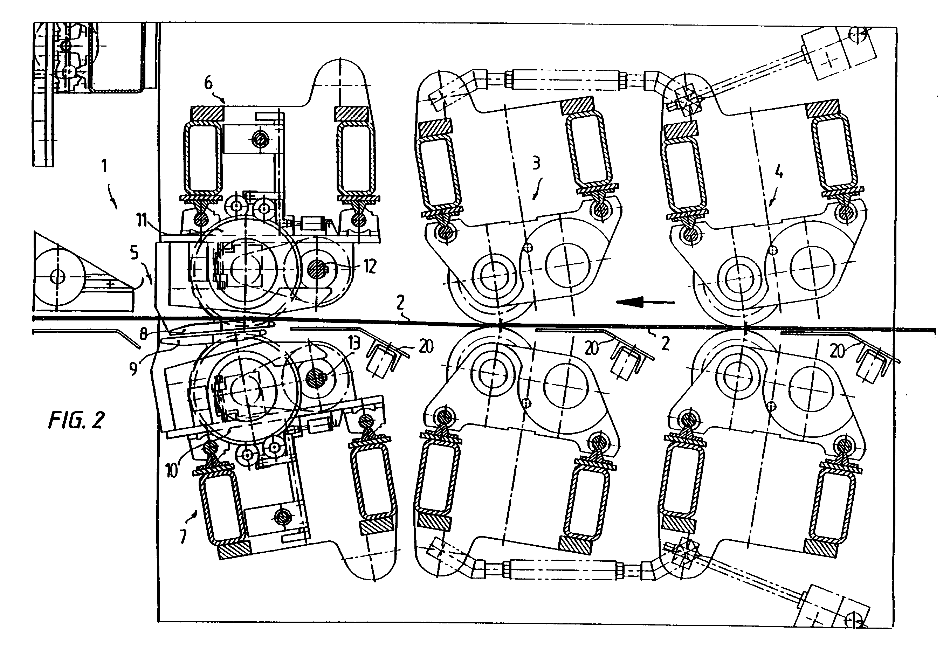

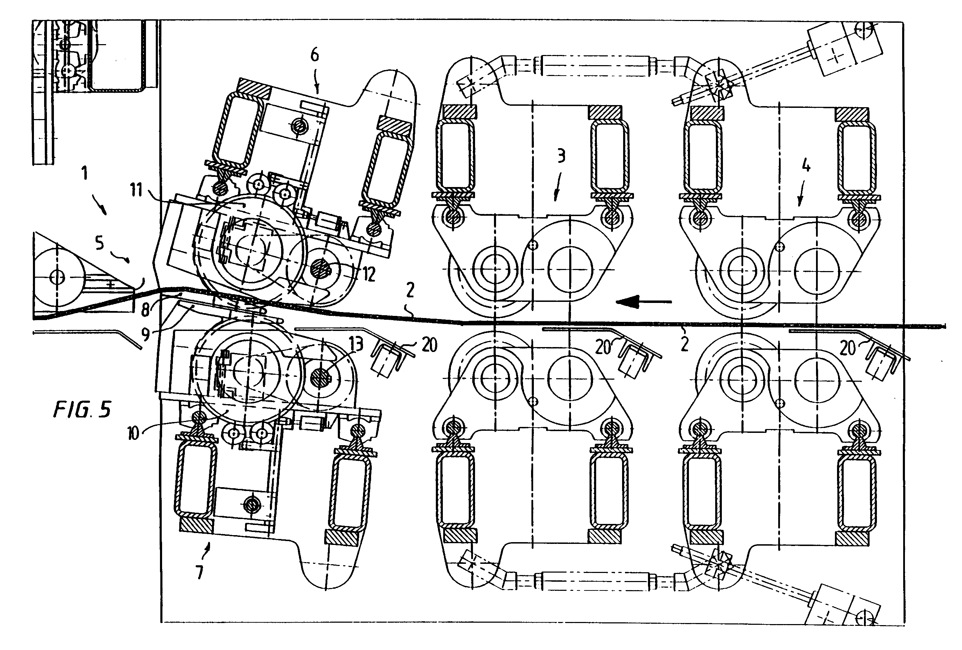

Nach Fig. 2 bis 5 schwenkt die obere Schneideinheit 6 um einen geringen Winkelbetrag um die Lagerung 12 im Uhrzeigersinn. Entsprechend wird auch die auf der Gegenfläche 8 aufliegende Warenbahn 2 bewegt. Gleichzeitig schwenkt die untere Schneideinheit 7 im Uhrzeigersinn um die Lagerung 13. Dieser Schwenkvorgang erfolgt solange, bis die Position nach Fig. 5 erreicht ist.

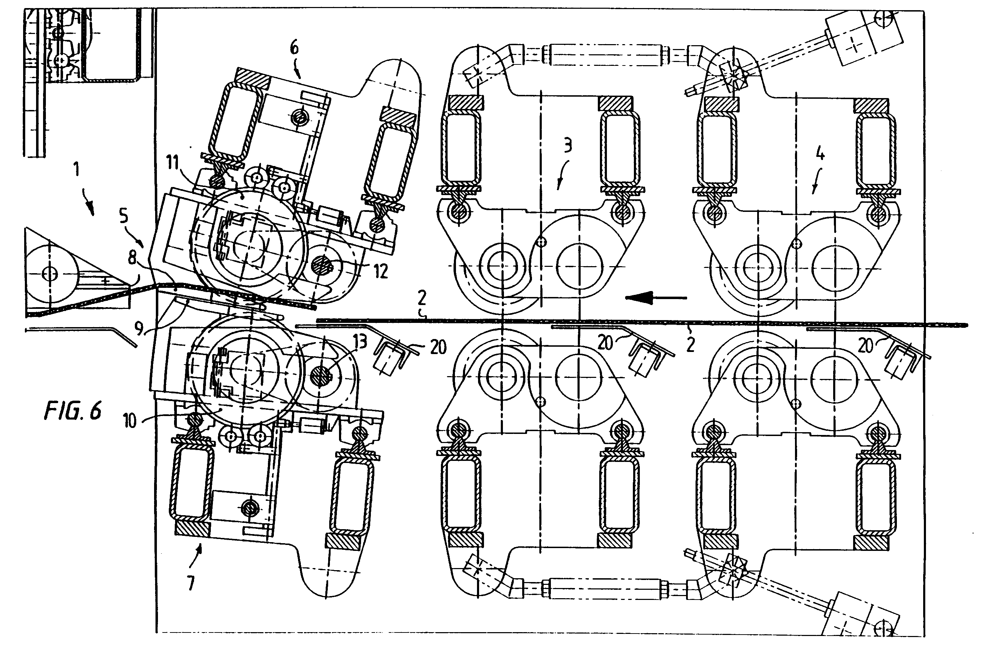

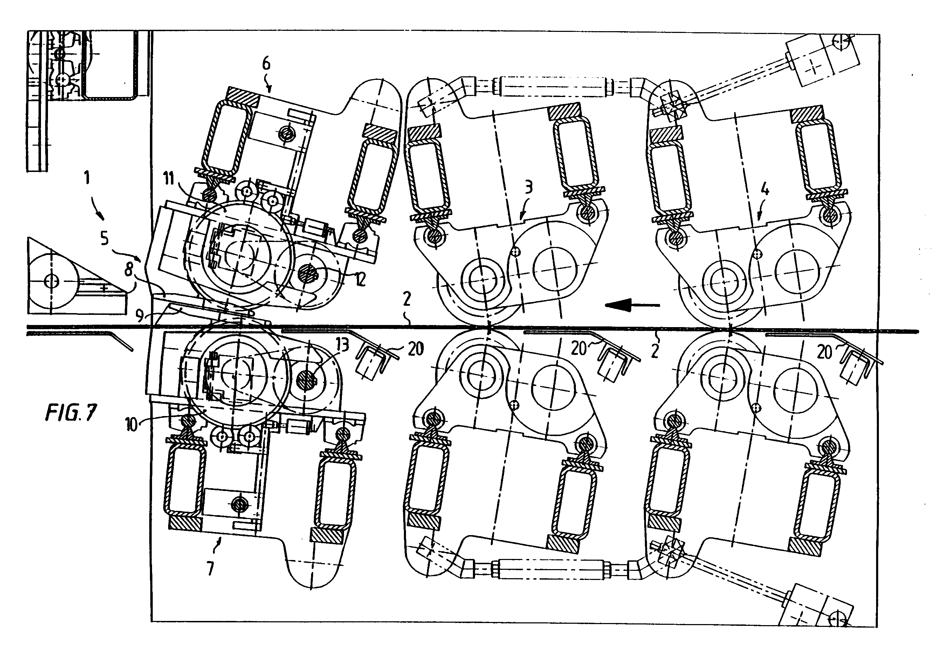

Nach Fig. 6 erfolgt eine Trennung der Warenbahn 2 durch einen nicht näher dargestellten Kurzquerschneider. Damit liegt die vordere Kante der neu zulaufenden Wellpappenbahn 2 im Bereich der Gegenfläche 9 der unteren Schneideinheit 7, so daß gemäß Fig 7 die untere Schneideinheit 7 mit neuem Format die Wellpappenbahn schneidet, wohingegen sich die obere Schneideinheit 6 nunmehr in Ruhestellung befindet.

Die Rillwerkzeuge 3 und 4 wurden bereits bevor die Restbahn die Rillwerkzeuge verläßt, von der Bahn genommen, neu positioniert und wieder auf die neu ankommende Bahn gesetzt. Damit dies möglichst schnell erfolgt und maximal der letzte und der erste neue Bogen mit entsprechender Rillung versehen wird, sind die Rillwerkzeuge mit einer Schnellpositioniervorrichtung bestückt.

Wie erkennbar, arbeiten beide Schneideinheiten, nämlich die obere Schneideinheit 6 und die untere Schneideinheit 7, immer abwechselnd, d.h. die obere Schneideinheit 6 arbeitet und die untere Schneideinheit 7 wird auf einen neuen Auftrag vorpositioniert und umgekehrt. Um mehr Nutzen schneiden zu können, ist es bei Tandembetrieb aber auch möglich, die Schneideinheiten gemeinsam einzusetzen.

Bei Kurzquerschneiderschnitt oder auch bereits vorher bewegen sich beide Schneideinheiten 6, 7 synchron über einen Antrieb derart, daß die in Arbeit befindliche Schneideinheit mitsamt der darin durchlaufenden Wellpappenbahn 2 aus der horizontalen Arbeitsposition herausbewegt wird. Die Wellpappenbahn 2 nimmt hierbei keinen Schaden, da die Schwenkbewegung nur minimal ist.

Kommt nun der die alte und die neue Bahn 2 trennende, durch einen der Schneid- und Rillmaschine 1 vorgelagerten Kurzquerschneider ausgeführten Kurzquerschneiderschnitt zu der betreffenden Schneideinheit, so läuft gemäß Fig. 6 und 7 die neu ankommende Bahn 2 automatisch in die neu voreingestellte untere Schneideinheit 7 bzw. umgekehrt. Die alte auslaufende Wellpappenbahn wird gänzlich von der oberen Schneideinheit 6 geschnitten. Diese obere Schneideinheit 6 ist damit frei und kann neu positioniert werden.

Derselbe Ablauf erfolgt beim Wechsel der unteren arbeitenden Schneideinheit 7 auf die obere vorpositionierte Schneideinheit 6. Da diese beiden Schneideinheiten 6 und 7 abwechselnd arbeiten, reicht eine relativ kleine Verstellgeschwindigkeit aus, um die Werkzeuge neu einzustellen.

Bei der Ausführungsform nach Fig. 1 bis 7 werden die beiden Schneideinheiten 6 und 7 jeweils um die Lagerung 12 bzw. 13 geschwenkt, wobei die um diese Lagerung schwenkbaren Gegenflächen 8 und 9 der jeweiligen Schneidwerkzeuge 6 und 7 als Führungsvorrichtung für die wechselweise Beschickung der Warenbahn 2 zu einer der Schneideinheiten 6, 7 dienen.

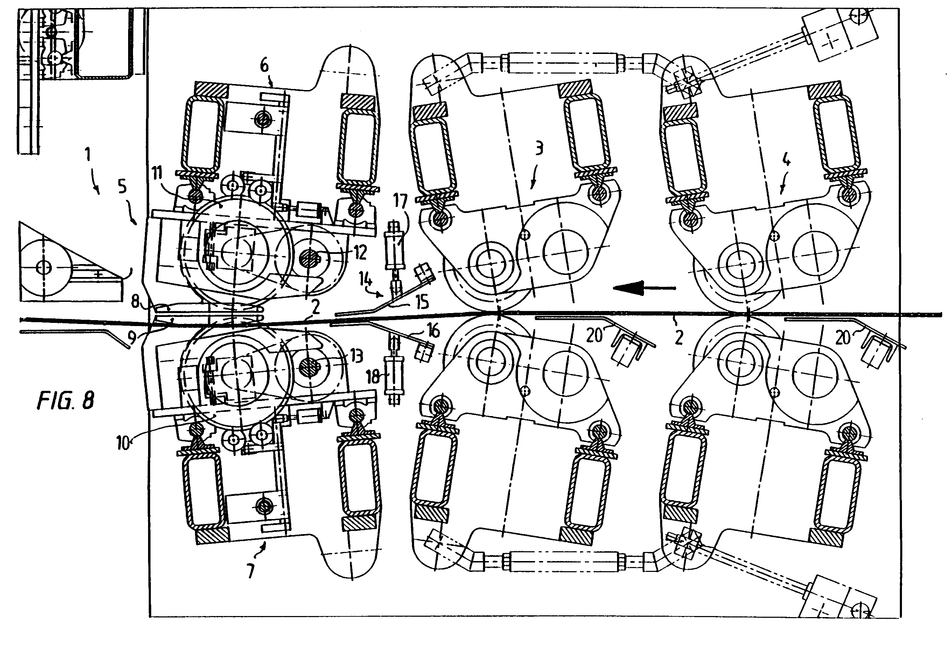

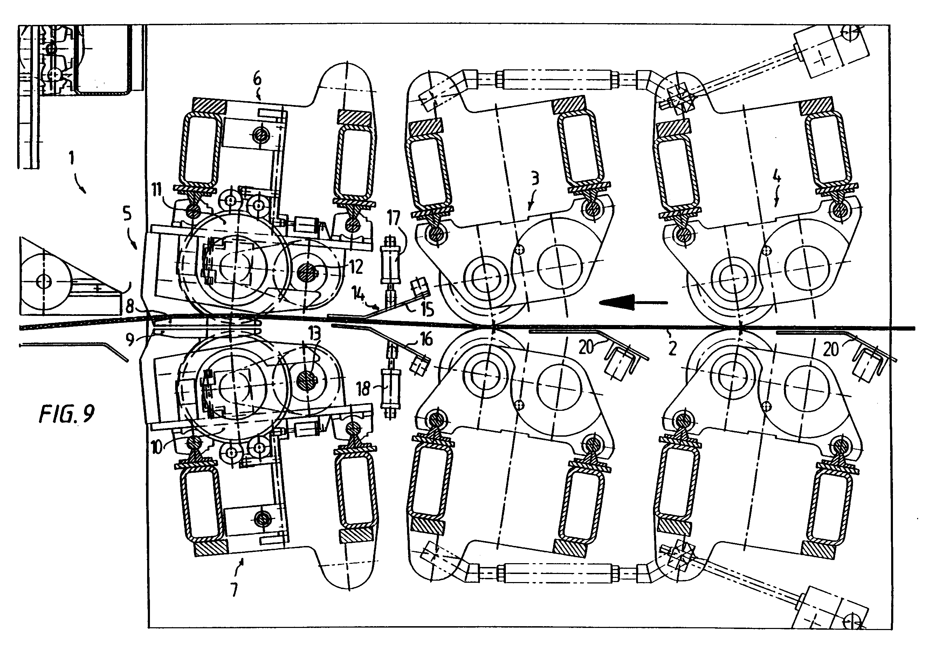

Bei der Ausführungsform nach Fig. 8 und 9 besteht alternativ die Möglichkeit, die obere und untere Schneideinheit 6, 7 in ihrer Mittelstellung festzumontieren und den Formatwechsel durch einen Führungstisch 14 vorzusehen, welcher vor den Schneideinheiten 6, 7 angeordnet ist. Dieser Führungsstisch 14 besteht aus zwei Platten 15 und 16, zwischen welchen die warenbahn 2 läuft. Beide Platten 15 und 16 sind jeweils mit einer Kolbenzylindereinheit 17 und 18 verbunden.

Bei der Position nach Fig. 8 durchläuft die Wellpappenbahn 2 die untere Schneideinheit 7. Wird nun gemäß Fig. 9 der Führungstisch 14 mit Hilfe der Kolbenzylindereinheiten 17 und 18 verschwenkt, so wird die Warenbahn 2 nunmehr zu der oberen Schneideinheit 6 bewegt. Auch hierdurch ist eine wechselweise Beschickung der oberen und der unteren Schneideinheit 6 bzw. 7 bei Formatwechsel auf einfache Weise durchführbar. Wiederum sind die Rillwerkzeuge 3 und 4 mit einer entsprechenden Schnellpositioniervorrichtung bestückt, so daß diese Werkzeuge entsprechend schnell und einfach eingestellt werden können.

Insgesamt ergibt sich damit eine Maschine, bei welcher der Formatwechsel ohne nennenswerte Restbahnbeschleunigung, ohne nennenswerte Lückenbildung der Warenbahn und ohne erheblichen Kostenaufwand durchzuführen ist. Weiterhin muß vorteilhafterweise zum Durchführen des Formatwechsels die erreichbare optimal hohe Produktionsgeschwindigkeit nicht verringert werden, so daß keine Qualitätsmängel hinsichtlich Verklebung und Geradheit der Wellpappe entstehen können.

## Patentansprüche

1. Schneid- und Rillmaschine für eine Warenbahn, insbesondere Wellpappenbahn
mit einer den Rillwerkzeugen nachgeordneten Messersektion mit Schneidwerkzeugkörpern,
dadurch gekennzeichnet,
daß die Messersektion (5) aus mindestens zwei voneinander unabhängigen Schneideinheiten mit Schneidmesser (10, 11), Gegenfläche (8, 9) und voneinander unabhängig einstellbaren Schneidwerkzeugkörpern besteht, und
daß über mindestens eine Führungsvorrichtung die Warenbahn (2) wechselweise durch eine der Schneideinheiten (6, 7) geführt ist.

2. Maschine nach Anspruch 1, dadurch gekennzeichnet, daß die Rillwerkzeuge (3, 4) jeweils mit einer Schnellpositioniervorrichtung verbunden sind.

3. Maschine nach Anspruch 1, dadurch gekennzeichnet, daß die Messersektion (5) aus zwei übereinander angeordneten Schneideinheiten (6, 7) besteht.

4. Maschine nach Anspruch 1, wobei jede Schneideinheit schwenkbar gelagert ist, dadurch gekennzeichnet, daß die um die Lagerung (12, 13) schwenkbare Gegenfläche (8, 9) der jeweiligen Schneideinheit (6, 7) die Führungsvorrichtung für die wechselweise Beschickung der Warenbahn (2) zur einer der Schneideinheiten (6, 7) ist.

5. Maschine nach Anspruch 1, dadurch gekennzeichnet, daß den beiden Schneideinheiten (6, 7) als Führungsvorrichtung mindestens ein den Lauf der Warenbahn steuerndes Führungselement vorgeschaltet ist.

6. Maschine nach Anspruch 5, dadurch gekennzeichnet, daß das Führungselement als umsteuerbarer Führungstisch (14) ausgebildet ist.

7. Maschine nach einem der vorhergehenden Ansprüche, dadurch gekennzeichnet, daß die Steuerung der Führungsvorrichtung durch mindestens eine Kolbenzylindereinheit (17, 18) erfolgt.

8. Maschine nach einem oder mehreren der vorhergehenden Ansprüche, dadurch gekennzeichnet, daß für den Formatwechsel keine wesentliche Beschleunigung der Restbahn 1 gegenüber der nachfolgenden Bahn erfolgt, so daß keine wesentliche Lückenbildung in der Warenbahn eintritt.

9. Maschine nach einem oder mehreren der vorhergehenden Ansprüche, dadurch gekennzeichnet, daß für den Formatwechsel die Ist-Produktionsgeschwindigkeit beibehalten ist.
